(19) Europäisches Patentamt
European Patent Office
Office européen des brevets

(11) **EP 0 993 423 B1**

(12) **EUROPEAN PATENT SPECIFICATION**

(45) Date of publication and mention
of the grant of the patent:
**09.03.2005 Bulletin 2005/10**

(51) Int Cl.7: **C04B 41/87**

(86) International application number:
**PCT/US1999/009086**

(21) Application number: **99937138.8**

(22) Date of filing: **27.04.1999**

(87) International publication number:
**WO 1999/055640 (04.11.1999 Gazette 1999/44)**

(54) **ARTICLE HAVING A MODIFIED MULLITE COATING AND METHOD OF MAKING THE SAME**

FORMKÖRPER MIT EINEM ÜBERZUG AUS MODIFIZIERTEM MULLIT UND VERFAHREN ZU DESSEN HERSTELLUNG

ARTICLE AVEC UN ENDUIT EN MULLITE ET PROCEDE DE FABRICATION CORRESPONDANT

(84) Designated Contracting States:
**CH DE FR GB IT LI**

(30) Priority: **27.04.1998 US 83158 P**

(43) Date of publication of application:
**19.04.2000 Bulletin 2000/16**

(73) Proprietor: **GENERAL ELECTRIC COMPANY
Schenectady, NY 12345 (US)**

(72) Inventors:
• **WANG, Hongyu
Niskayuna, NY 12309 (US)**
• **LEE, Kang Neung
Westlake, OH 44145 (US)**

(74) Representative: **Szary, Anne Catherine, Dr. et al
London Patent Operation
General Electric International, Inc.
15 John Adam Street
London WC2N 6LU (GB)**

(56) References cited:
**WO-A-96/20903          US-A- 4 839 316
US-A- 5 332 619**

• **PATENT ABSTRACTS OF JAPAN vol. 018, no. 032 (C-1154), 18 January 1994 (1994-01-18) & JP 05 262585 A (TOSHIBA CORP), 12 October 1993 (1993-10-12)**

**Description**

This invention was made with government support under Contract No. NAS3-26385 awarded by NASA. The government may have certain rights in the invention.

BACKGROUND OF THE INVENTION

The invention relates to an article having at least a modified mullite coating. The invention further relates to a silicon-containing ceramic substrate having a modified mullite coating and at least one additional layer of material.

Silicon-containing materials have been proposed for structures used in high temperature applications, such as in heat exchangers and advanced internal combustion engines. For example, silicon-based composite ceramics have been proposed as materials for applications in combustors for commercial airplanes. However, these ceramic materials exhibit poor oxidation resistance in reducing atmospheres and in environments containing salts, water vapor or hydrogen. Hence, it is necessary to apply environmental barrier coatings to the silicon-containing materials to provide protection from environmental attack at elevated temperatures and to apply thermal barrier coatings to extend the life at elevated temperatures.

Mullite has been proposed as a material for environmental barrier coatings as well as thermal barrier coatings on silicon-containing materials. Mullite exhibits low thermal conductivity. It has low density and a high melting point. However, mullite coatings tend to develop cracks perpendicular to substrates and through the thickness of the coating. These cracks are detrimental to the functions of the mullite coating because they serve as transport paths for corrosive species causing severe oxidation and corrosion at the interface between the coating and substrate. Additionally, cracks in the coating concentrate stresses. The cracks apply shear and tensile forces on the substrate to cause substrate fractures.

Since the crack openings increase with increasing distance from the mullite substrate interface, the cracks may be the result of the difference in thermal expansion between the mullite coating and the silicon-containing substrate. FIG. I shows differences in the coefficient of thermal expansion (CTE) of mullite, silicon carbide (SiC) and silicon (Si). Thus, there is a need to provide coatings or layers to silicon-containing substrates that act at least as environmental barrier coatings having reduced cracks.

US-A-4839316 discloses ceramic composites formed of an alumina matrix reinforced with silicon carbide whiskers homogenously dispersed therein provided with a protective coating for preventing fracture strength degradation of the composite by oxidation during exposure to high temperatures in oxygen-containing atmospheres. The coating prevents oxidation of the silicon carbide whiskers within the matrix by sealing off the exterior of the matrix so as to prevent oxygen transport into the interior of the matrix. The coating is formed of mullite or mullite plus silicon oxide and alumina and is formed in place by heating the composite in air to a temperature greater than 1200°C. This coating is less than about 100 microns thick and adequately protects the underlying composite from fracture strength degradation due to oxidation.

JP-A-5262585 discloses a structural heat-resistant ceramic composite part produced by covering the surface of a substrate comprising a SiC ceramic of B-C auxiliary series non-pressed sintered product with a compositionally gradient layer containing $Al_2O_3$ and mullite $(3Al_2)_3.2SiO_2-3Al_2O_3.SiO_2)$ characterized in that the Al component content of the outer surface is maximum in the compositionally gradient layer and that the content of the Al component is gradually decreased as approaching the interface with the substrate. In the preferable mode of the compositionally gradient layer, the outer surface comprises an $Al_2O_3$ ceramic phase, and the interface with the substrate comprises a mullite ceramic phase.

SUMMARY OF THE INVENTION

The present invention is based on the discovery that a modifier component can be added to a mullite coating to reduce cracks in the coating applied to a silicon-containing substrate. The mullite coating with the modifier component is also referred to as a modified mullite coating. The modified mullite coating reduces fracture at the interface of the mullite coating and the silicon-containing substrate.

In one aspect, the invention is an article comprising a silicon-containing substrate and a modified mullite coating as set out in claim 1. The modified mullite coating comprises mullite and a modifier component that reduces cracks, including through-thickness cracks, in the mullite coating. Preferably, the modifier component comprises a component having a lower thermal expansion than the mullite coating. As a result, the modifier component imparts a lower thermal expansion coefficient to the mullite coating. The article can further comprise an external environmental /thermal barrier coating applied to the modified mullite coating. The modified mullite coating then functions as a bond coat between the external environmental/thermal barrier coating and the silicon-containing substrate.

In another aspect, the invention relates to a method of forming an article with at least a modified mullite coating. In the method, a silicon-containing substrate is formed and a modified mullite coating is applied. The modified mullite coating comprises mullite and a modifier component that reduces cracks in the coating, as set out in claim 11.

BRIEF DESCRIPTION OF THE DRAWINGS

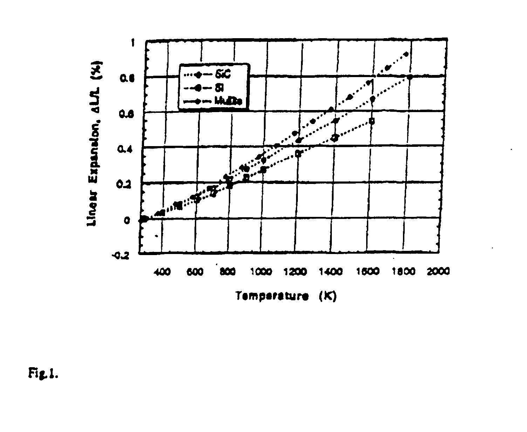

FIG. 1 is a graph illustrating comparative coefficient of thermal expansions for mullite, silicon carbide and silicon.

FIG. 2 is a graph illustrating comparative coefficient of thermal expansions for mullite, cordierite, fused silica and celsian (BaO•Al$_2$O$_3$•2SiO$_2$).

FIG. 3 is a photomicrograph for a mullite and yttria stabilized zirconia-coated silicon carbide/silicon carbide composite.

FIG. 4 is a photomicrograph for a mullite with twenty-two volume percent calcium aluminosilicate and a yttria stabilized zirconia-coated silicon carbide/silicon carbide composite; and

FIG. 5 is a photomicrograph for a mullite with eighteen volume percent barium strontium aluminosilicate and a yttria stabilized zirconia-coated silicon carbide/silicon carbide composite.

DETAILED DESCRIPTION OF THE INVENTION

According to the invention, a modifier component is added to a mullite coating to reduce or eliminate cracks, including through-thickness cracks. By through thickness-cracks is meant cracks that extend substantially through the entire thickness of the mullite coating from near the top surface to near the bottom of the coating or near the silicon-containing substrate. The modifier components can be categorized into one or more of at least three functional groups. (1) The modifier component imparts a closer coefficient of thermal expansion (CTE) match between the modified mullite coating and silicon-containing substrate than the coefficient of thermal expansion match between the mullite coating without the modifier and the silicon-containing substrate. (2) The modifier component provides a phase or phases that reduce the overall elastic modulus of the modified mullite coating to reduce thermal stress in said coating. (3) The modifier component provides a phase or phases that serve as crack arresters to increase resistance of the modified mullite coating to crack propagation. The modifer component increases the toughness of the modified mullite coating.

The modified mullite coating is applied to a silicon-containing substrate. Suitable silicon-containing substrates comprise materials that result in cracking of an applied mullite coating. The silicon-containing substrate can comprise a ceramic such as a silicon-based ceramic. Examples are silicon carbide, silicon nitride, silicon carbon nitride, silicon oxynitride, and the like. The silicon- containing ceramic substrate can be a monolith or composite. A composite can comprise a silicon, silicon carbide, carbon or mixtures thereof reinforcing fibers, particulate or whiskers and a silicon-based matrix. The fibers. particulate and whiskers generally have at least one outer coating, such as silicon carbide, silicon boride, silicon nitride and the like. The matrix can be processed by melt infiltration (MI), chemical vapor infiltration (CVI) or other technique. Exemplary silicon-containing substrates include a monolithic silicon carbide and silicon nitride substrate, a silicon carbide fiber-reinforced silicon carbide matrix composite, carbon fiber-reinforced silicon carbide matrix composite, and a silicon carbide fiber-reinforced silicon nitride composite. The preferred substrate comprises a silicon carbide fiber-reinforced silicon-silicon carbide matrix composite processed by silicon melt infiltration.

Also suitable as silicon-containing substrates are silicon metal alloys. These alloys include niobium silicon alloys, molybdenum silicon alloys and the like.

The coated article of the invention can comprise a thermal barrier coating applied to the modified mullite coating. Suitable external environmental/thermal barrier coatings include chemically stabilized zirconias, such as yttria-stabilized zirconia, scandia-stabilized zirconia, calcia-stabilized zirconia and magnesia-stabilized zirconia, alumina and alumina silicate. Preferred external environmental/thermal barrier coatings in this invention include yttria-stabilized zirconia (YSZ), barium strontium aluminosilicate (BSAS), calcium aluminosilicate (CAS) and yttrium silicates (YS).

The modified mullite coating of the invention comprises mullite and a modifier component as set out in claim 1. Mullite is a stable form of aluminum silicate found naturally or formed by heating other aluminum silicates such as cyanite, sillimanite and andalusite, to high temperature. Mullite is an excellent high temperature material (incongruent melting temperature about 1830C) with high corrosion resistance, high thermal shock resistance and chemical stability at high temperatures, such as up to about 1700C. It is the only stable crystalline compound in the aluminum silicate system under normal atmospheric pressure. It has a chemical composition ranging from 3Al$_2$O$_3$·2SiO$_2$ (71.8 wt% Al$_2$O$_3$) (3/2 mullite) to approximately 2Al$_2$O$_3$·SiO$_2$)$_2$ (77.3 wt%Al$_2$O$_3$)(2/1 mullite). It crystallizes in the orthorhombic system. It has a melting point of 1850 C. and a coefficient of thermal expansiion of 5.62 x 10$^{-6}$/ C in the 25-1500 C range. In the absence of glassy inclusions, mullite retains greater than 90% of its room temperature strength to 1500 C and displays very high creep and thermal shock resistance.

Examples of suitable modifier components of the modified mullite coating include alkaline earth aluminosilicates, preferably with the formula MO•Al$_2$O$_3$•2SiO$_2$, where M is an alkaline earth element. Preferred modifier components of the formula MO•Al$_2$O$_3$•2SiO$_2$ include barium feldspar (BaO•Al$_2$O$_3$•2SiO$_2$), strontium feldspar (SrO•Al$_2$O$_3$•2SiO$_2$), and combina-

tions of barium feldspar (BaO•Al$_2$O$_3$•2SiO$_2$), and strontium feldspar (SrO•Al$_2$O$_3$•2SiO$_2$). Preferably, the alkaline earth aluminosilicate has a monoclinic celsian crystalline phase. Most preferred aluminosilicates include (BaO)$_{0.75}$(SrO)$_{0.25}$•Al$_2$O$_3$•2SiO$_2$ referred to as BSAS, CaO•Al$_2$O$_3$•2SiO$_2$ referred to as CAS and BaO•Al$_2$O$_3$•2SiO$_2$. Other suitable modifiers include materials referred to as NZP's such as NaZr$_2$P$_3$O$_{12}$, Ba$_{1.25}$ Zr$_4$P$_{5.5}$Si$_{0.5}$O$_{24}$, Ca$_{0.5}$Sr$_{0.5}$Zr$_4$(PO$_4$)$_6$ and Ca$_{0.6}$Mg$_{0.4}$ Sr$_4$ (PO$_4$)$_6$. Other preferred modifier components include yttrium silicates, calcium aluminates including 3Ca$_{0.5}$•5 Al$_2$O$_3$, aluminum titanates including Al$_2$O$_3$•TiO$_3$, cordierite (2MgO•Al$_2$O$_3$•5 SiO$_2$), fused silica (SiO$_2$) and silicon (Si). These materials are also chemically compatible with mullite.

The modifier components may be added to the modified mullite coating in a percent volume range between about 5 to about 50. Preferably, the modifier component is present in about 10 to about 30 volume percent of the modified mullite coating and most preferably in about 15 to 25 volume percent.

In the group (1) modifier components, a coefficient of thermal expansion is imparted to the modified mullite coating that is closer to the coefficient of thermal expansion of the silicon-containing substrate. The coefficient of thermal expansion of a polycrystalline composite material is determined by the volume fractions of its constituents. The coefficient of thermal expansion can generally be approximated by using the rule of mixture:

$$\underline{\alpha}_c = \underline{\alpha}_1 V_1 + \underline{\alpha}_2 V_2 + ... \underline{\alpha}_i V_i$$

where $\underline{\alpha}_c$ is the coefficient of thermal expansion of the composite, and $\underline{\alpha}_1$, $\underline{\alpha}_2$ and $\underline{\alpha}_i$ and $V_1$, $V_2$ and $V_i$ are the coefficient of thermal expansions and volume fractions of phases 1, 2 and i, respectively. Therefore, adding a phase or phases with lower coefficient of thermal expansion to a material will result in a composition that has a lower coefficient of thermal expansion than the starting material. To duplicate the coefficient of thermal expansion of the silicon-containing substrate, the volume faction of the modifier component in the modified mullite coating should be proportionate to the ratio of the difference between the coefficient of thermal expansion of the silicon-containing substrate and the coefficient of thermal expansion of the mullite to the difference between the coefficient of thermal expansion of the modifier component and the coefficient of thermal expansion of the mullite.

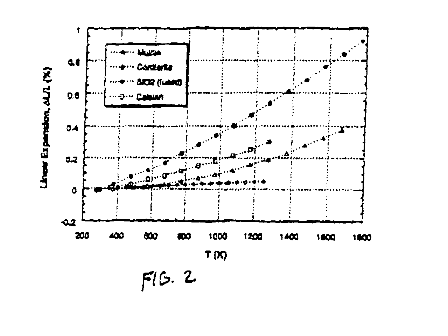

A comparison of coefficient of thermal expansion of mullite with the coefficient of thermal expansions of cordierite, fused silica and celsian (BaO•Al$_2$O$_3$•2SiO$_2$) is illustrated in Fig. 2. According to the invention, co-depositing mullite with a low thermal expansion modifier component such as cordierite, fused silica or celsian (BaO•Al$_2$O$_3$•2SiO$_2$) on silicon or silicon-containing ceramic substrates or ceramic composite substrates imparts an improved thermal expansion match of the modified mullite coating with the silicon-containing substrate than with a monolithic mullite coating.

Cordierite is an incongruently melting compound with mullite formed first when cooling from the liquid phase. Upon quenching form the melt splash during the plasma spray, it may remain as a glassy material or mullite with a glass phase. This may require a post-spray annealing process at appropriate temperatures to convert the material to cordierite. The amount of modifier component addition can be first estimated by the rule of mixture estimate. But because of the complexity of phase composition in the system, a trial and error process may have to be executed before an optimal proportion is reached.

The mullite coating with the modifier component can be applied to the silicon-containing substrate by any suitable method including thermal spray, air plasma spray (APS) and vacuum or low pressure plasma spray (VPS or LPPS), high velocity oxy-fuel (HVOF) spray, vapor deposition, including chemical vapor deposition (CVD), physical vapor deposition (PVD) and solution techniques such as sol-gel, slurry coating or colloidal suspension coating. A constituent starting powder of the mullite coating and modifier component may be premixed through a vigorous mechanical process, such as ball milling, to provide interlocking of the powders and prevent segregation of phases due to density differences. For the same purpose, a sol-gel or colloidal process may be employed to coat the particles of one constituent with another.

Sarin *et al.,* U.S. Pat. 5,763,008 and Lee *et al.,* U.S. Pat. 5,496,644 describe exemplary methods of applying mullite coatings. Sarin *et al* discloses a chemical deposition process comprising steps of establishing a flow of reactants which will yield mullite in a CVD reactor, and depositing a crystalline coating from the reactant flow. Lee *et* al. discloses a method of plasma spraying mullite coatings onto silicon-based ceramic materials. The method prevents deposition of amorphous mullite by heating the silicon-containing substrate to a very high temperature (greater than 1000C) during the spraying process.

The following examples are illustrative of the invention.

Examples

Powders of CaO•Al$_2$O$_3$•2SiO$_2$ (CAS) (22 vol%) and (BaO)$_{0.75}$(SrO)$_{0.25}$•Al$_2$O$_3$•2SiO$_2$ (BSAS) (18 vol%) were added to mullite powder by ball milling, respectively. The composite powders were sprayed using air plasma spray (APS) onto a silicon carbon fiber reinforced silicon carbide-silicon matrix composite substrate processed by melt infiltration. The substrate temperature was kept at 1050 to 1250 C. The plasma torch model was Electro-plasma 03CA, with 45 kW power, argon (14.4 SLM) as primary gas and helium (9.8 SLM) as secondary gas. Plasma torch to substrate distance was 4". A top coat of yttria-stabilized zirconia (YSZ) was applied on top of the composite mullite coating by air plasma spray using standard operating procedures for thermal barrier coatings. A baseline sample of monolithic mullite coating on the ceramic composite substrate was also prepared using the thermal spray technique with a yttria-stabilized zirconia topcoat.

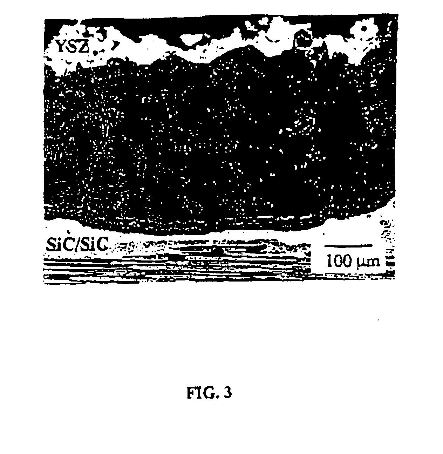

Samples of silicon-containing ceramic substrates with the modified mullite and thermal barrier coatings and monolithic mullite coatings were subjected to an environmental furnace test with two hour cycles from room temperature to 1300 C for 500 hours in 90%$H_2O$ 10%$O_2$. The results are shown in Figs 3-5.

Figure 3 shows that through-thickness cracks developed in the baseline sample with the monolithic mullite coating. Extensive oxidation of the silicon-based ceramic composite at the mullite/substrate interface resulted in failure of the mullite coating (environmental barrier coating) during the test.

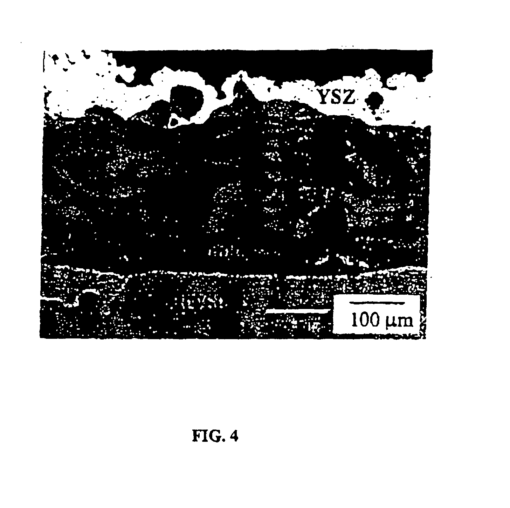

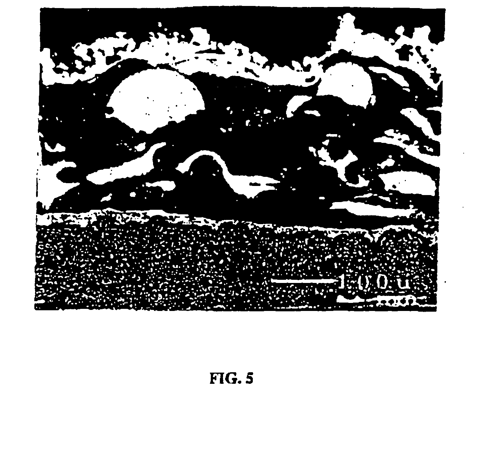

In contrast, the composite modified mullite coatings shown in Figs. 4 and 5 exhibited no through-thickness cracks in the modified mullite coating and the coatings survived the test with minimal change at the modified mullite coating/substrate interface.

**Claims**

1. An article comprising:

   a silicon-containing substrate; and
   a modified mullite coating comprising mullite and a modifier component that reduces cracks in the modified mullite coating, wherein said modifier component comprises an alkaline earth aluminosilicate, a monoclinic celsian crystalline phase, an NZP ($NaZr_2P_3O_{12}$) modifier or a calcium aluminate or an aluminum titanate.

2. The article of claim 1, wherein said modifier component comprises a modifier component of the formula $MO.Al_2O_3.xSiO_2$, where M is an alkaline earth element and $1 \leq x \leq 3$.

3. The article of claim 1, wherein said modifier component comprises barium feldspar ($BaO.Al_2O_3.2SiO_2$), strontium feldspar ($SrO.Al_2O_3.2SiO_2$) or a combination of barium feldspar ($BaO.Al_2O_3.2SiO_2$), and strontium feldspar ($SrO.Al_2O_3.2SiO_2$).

4. The article of claim 1, wherein said modifier component comprises barium strontium aluminosilicate (BSAS), calcium aluminosilicate (CAS), yttrium silicate (YS) or a combination thereof.

5. The article of claim 1, wherein said modifier com-

ponent comprises $NaZr_2P_3O_{12}$, $Ba_{1.25}Zr_4P_{5.5}Si_{0.5}O_{24}$, $Ca_{0.5}Sr_{0.5}Zr_4(PO_4)_6$ or $Ca_{0.6}Mg_{0.4}Sr_4(PO_4)_6$.

6. The article of claim 1, wherein said modifier component comprises $3Ca_{0.5}.5Al_2O_3$ or $Al_2O_3.TiO_2$.

7. The article of claim 1, wherein said modifier component comprises cordierite ($2MgO.2Al_2O_3.5SiO_2$), fused silica ($SiO_2$) silicon (Si), or mixture thereof.

8. The article of claim 1, wherein said silicon-containing substrate is a monolithic or composite silicon carbide/silicon ceramic or a monolithic or composite silicon nitride.

9. The article of claim 1, further comprising an external environmental/thermal barrier coating applied to said modified mullite coating.

10. The article of claim 9, wherein said thermal barrier coating comprises yttria-stabilized zirconia, scandia-stabilized zirconia, calcia stabilized zirconia, magnesia-stabilized zirconia, alumina or alumina silicate.

11. A method of forming an article, comprising; forming a silicon-containing substrate; and applying a modified mullite coating comprising mullite and a modifier component that reduces cracks in the modified mullite coating, wherein said modifier component comprises an alkaline earth aluminosilicate, a monoclinic celsian crystalline phase, an NZP ($NaZr_2P_3O_{12}$) modifier or a calcium aluminate or an aluminum titanate.

12. The method of claim 11, further comprising annealing said modified mullite coating to convert a glass phase of said modifier component to a phase compatible with said mullite.

13. The method of claim 11, further comprising applying an external environmental/ thermal barrier coating onto said modified mullite coating.

14. The method of claim 11, comprising applying said modified mullite coating by thermal spray air plasma spray, vacuum plasma spray, low pressure plasma spray, high velocity oxy-fuel (HVOF) spray, vapor deposition., physical vapor deposition (PVD) or solution technique.

15. The method of claim 11, comprising applying said modified mullite coating by chemical vapor deposition, by sol-gel, slurry coating or colloidal suspension coating.

16. The method of claim 11, comprising forming the modified mullite coating by first forming a starting powder of the coating and modifier component by ball milling.

17. The method of claim 11, comprising forming the modified mullite coating by a sol-gel or colloidal process.

18. A method for making a coated article comprising forming a silicon/silicon carbide composite having silicon carbide-containing fibers; applying a modified mullite coating comprising mullite and barium strontium aluminosilicate (BSAS), that reduces cracks in the modified mullite coating; and optionally applying a yttria-stabilized zirconia coating to the modified mullite coating.

19. A coated article comprising a silicon/silicon carbide composite having silicon carbide-containing fibers; a modified mullite coating comprising mullite and barium strontium aluminosilicate (BSAS), that reduces cracks in the modified mullite coating; and optionally a yttria stabilized zirconia coating on the modified mullite coating.

**Patentansprüche**

1. Ein Gegenstand umfassend:

ein Silizium enthaltendes Substrat; und einen Überzug aus modifizierten Mullit aufweisend Mullit und einen Modifizierungsbestandteil, welcher Risse im Überzug aus modifiziertem Mullit verringert, wobei der Modifizierungsbestandteil ein Erdalkalialuminosilikat, eine monokline kristalline Celsianphase, einen NZP ($NaZr_2P_3O_2$) Modifizierer oder ein Calciumaluminat oder ein Aluminiumtitanat aufweist.

2. Gegenstand nach Anspruch 1, **dadurch gekennzeichnet, dass** der Modifizierungsbestandteil einen Modifizierungsbestandteil der Formel $MO.Al_2O_3.xSiO_2$ umfasst, worin M ein Erdalkalielement ist und $1 \leq x \leq 3$.

3. Gegenstand nach Anspruch 1, **dadurch gekennzeichnet, dass** der Modifizierungsbestandteil Bariumfeldspat ($BaO.Al_2O_3.2SiO_2$), Strontiumfeldspat ($SrO.Al_2O_3.2SiO_2$) oder eine Kombination von Bariumfeldspat ($BaO.Al_2O_3.2SiO_2$) und Strontiumfeldspat ($SrO.Al_2O_3.2SiO_2$) umfasst.

4. Gegenstand nach Anspruch 1, **dadurch gekennzeichnet, dass** der Modifizierungsbestandteil Bariumstrontiumaluminosilikat (BSAS), Calciumaluminosilikat (CAS), Yttriumsilikat (YS) oder eine Kombination davon umfasst.

5. Gegenstand nach Anspruch 1, **dadurch gekennzeichnet, dass** der Modifizierungsbestandteil $NaZr_2P_3O_{12}$, $Ba_{1.25}Zr_4P_{5.5}Si_{0.5}O_{24}$, $Ca_{0.5}Sr_{0.5}Zr_4(PO_4)_6$ oder $Ca_{0.6}Mg_{0.4}Sr_4(PO_4)_6$ aufweist.

6. Gegenstand nach Anspruch 1, **dadurch gekennzeichnet, dass** der Modifizierungsbestandteil $3CaO_{0.5}.5Al_2O_3$ oder $Al_2O_3.TiO_2$ umfasst.

7. Gegenstand nach Anspruch 1, **dadurch gekennzeichnet, dass** der Modifizierungsbestandteil Cordierit ($2MgO.2Al_2O_3.5SiO_2$), Quarzglas ($SiO_2$) Silizium (Si), oder eine Mischung daraus aufweist.

8. Gegenstand nach Anspruch 1, **dadurch gekennzeichnet, dass** das Silizium enthaltende Substrat eine monolithische oder Komposit-Siliziumcarbid/Siliziumkeramik oder ein monolithisches oder Komposit-Siliziumnitrid ist.

9. Gegenstand nach Anspruch 1, weiterhin aufweisend einen Überzug gegen externe Umwelteinflüsse/thermischen Barriereüberzug, welcher auf den Überzug aus modifizierten Mullit aufgebracht ist.

10. Gegenstand nach Anspruch 9, **dadurch gekennzeichnet, dass** der thermische Barriereüberzug mit Yttriumoxid stabilisiertes Zirkondioxid, mit Scandiumoxid stabilisiertes Zirkondioxid, mit Calciumoxid stabilisiertes Zirkondioxid, mit Magnesiumoxid stabilisiertes Zirkondioxid, Aluminiumoxid oder Aluminiumoxidsilikat aufweist.

11. Verfahren zur Formung eines Gegenstandes, bei welchem man: ein Silizium enthaltendes Substrat bildet; und einen Überzug aus modifiziertem Mullit aufbringt, der Mullit aufweist und einen Modifizierungsbestandteil, welcher Risse in dem Überzug aus modifizierten Mullit verringert, wobei der Modifizierungsbestandteil ein Erdalkalialuminosilikat, eine monokline kristalline Celsianphase, einen NZP ($NaZr_2P_3O_{12}$) Modifizierer oder ein Calciumaluminat oder ein Aluminiumtitanat umfasst.

12. Verfahren nach Anspruch 11, weiterhin umfassend, dass man die Beschichtung aus modifizierten Mullit tempert, um eine Glasphase des Modifizierungsbestandteils in eine mit dem Mullit kompatiblen Phase umzuwandeln.

13. Verfahren nach Anspruch 11, weiterhin aufweisend, dass man einen Überzug gegen externe Umwelteinflüsse/einen Überzug als thermische Barriere auf dem Überzug aus modifiziertem Mullit aufbringt.

14. Verfahren nach Anspruch 11, bei welchem man den Überzug aus modifiziertem Mullit durch thermisches Sprühluftplasmasprühen aufbringt, durch Vakuumplasmasprühen, durch Plasmasprühen bei niedrigem Druck, mittels Hochgeschwindigkeitssauerstoff-Brennstoffsprühen (high velocity oxy-fuel spray (HVOF)), Aufdampfung (vapor deposition), Abscheidung aus der Dampfphase (physical vapor deposition (PVD)) oder mittels Lösungsverfahren.

15. Verfahren nach Anspruch 11, bei welchem man den Überzug aus modifiziertem Mullit mittels Abscheidung aus der Dampfphase, durch Sol/Gel-Verfahren, Aufschlemmbeschichtung (slurry coating) oder kolloidale Suspensionsbeschichtung (colloidal suspension coating) aufbringt.

16. Verfahren nach Anspruch 11, bei welchem man den Überzug aus modifiziertem Mullit bildet, in dem man zuerst ein Ausgangspulver aus dem Überzug und dem Modifizierungsbestandteil durch Mahlen in einer Kugelmühle bildet.

17. Verfahren nach Anspruch 11, bei welchem man den Überzug aus modifiziertem Mullit mittels eines Sol/Gel-Verfahrens oder kolloidalen Verfahrens bildet.

18. Verfahren zum Herstellen eines beschichteten Gegenstandes bei welchem Verfahren man einen Silizium/Siliziumcarbidverbundwerkstoff formt, der Siliziumcarbid enthaltende Phasen hat; einen Überzug aus modifiziertem Mullit aufbringt, der Mullit und Bariumstrontiumaluminosilikat (BSAS) umfasst, welches die Risse im Überzug aus modifiziertem Mullit verringert; und gegebenenfalls einen Überzug aus mit Yttriumoxid stabilisierten Zirkondioxid auf dem Überzug aus modifiziertem Mullit aufbringt.

19. Ein beschichteter Gegenstand aufweisend einen Silizium/Siliziumcarbidverbundwerkstoff, der Siliziumcarbid enthaltende Phasen hat; einen Überzug aus modifiziertem Mullit, der Mullit und Bariumstrontiumaluminosilikat (BSAS) umfasst, welches Risse in dem Überzug aus modifiziertem Mullit verringert und gegebenenfalls einen Überzug aus mit Yttrium stabilisiertem Zirkondioxid auf dem Überzug aus modifiziertem Mullit.

**Revendications**

1. Article comprenant :

   - un substrat contenant du silicium,
   - et un revêtement de mullite modifiée, comportant de la mullite et un composant modificateur qui réduit les fissures dans le revêtement de mullite modifiée, lequel composant modificateur comprend un alumino-silicate de métal alcalino-terreux, une phase cristalline de celsian monoclinique, un modificateur NZP (de type $NaZr_2P_3O_{12}$), un aluminate de calcium ou un titanate d'aluminium.

2. Article conforme à la revendication 1, dans lequel ledit composant modificateur comprend un composant modificateur de formule $MO.Al_2O_3.xSiO_2$ dans laquelle M représente un élément alcalino-terreux et $1 \leq x \leq 3$.

3. Article conforme à la revendication 1, dans lequel ledit composant modificateur comprend un feldspath au baryum ($BaO.Al_2O_3.2SiO_2$), un feldspath au strontium ($SrO.Al_2O_3.2SiO_2$), ou une combinaison d'un feldspath au baryum ($BaO.Al_2O_3.2SiO_2$), et d'un feldspath au strontium ($SrO.Al_2O_3.2SiO_2$).

4. Article conforme à la revendication 1, dans lequel ledit composant modificateur comprend un alumino-silicate de baryum et strontium (BSAS), un alumino-silicate de calcium (CAS), un silicate d'yttrium (YS) ou une combinaison de ces composants.

5. Article conforme à la revendication 1, dans lequel ledit composant modificateur comprend du $NaZr_2P_3O_{12}$, du $Ba_{1,25}Zr_4P_{5,5}Si_{0,5}O_{24}$, du $Ca_{0,5}Sr_{0,5}Zr_4(PO_4)_6$ ou du $Ca_{0,6}Mg_{0,4}Sr_4(PO_4)_6$.

6. Article conforme à la revendication 1, dans lequel ledit composant modificateur comprend du $3Ca_{0,5}.5Al_2O_3$ ou du $Al_2O_3.TiO_2$.

7. Article conforme à la revendication 1, dans lequel ledit composant modificateur comprend de la cordiérite ($2MgO.2Al_2O_3.5SiO_2$), de la silice fondue ($SiO_2$), du silicium (Si) ou un mélange de ces composants.

8. Article conforme à la revendication 1, dans lequel ledit substrat contenant du silicium est une céramique monolithique ou composite de silicium/carbure de silicium, ou une céramique monolithique ou composite de nitrure de silicium.

9. Article conforme à la revendication 1, qui comporte en outre un revêtement formant barrière thermique et/ou barrière vis-à-vis du milieu extérieur, qui est appliqué par-dessus ledit revêtement de mullite modifiée.

10. Article conforme à la revendication 9, dans lequel ledit revêtement formant barrière thermique compred de la zircone stabilisée à l'oxyde d'yttrium, de la zircone stabilisée à l'oxyde de scandium, de la zircone stabilisée à la chaux, de la zircone stabilisée à la magnésie, de l'alumine ou un silicate d'alumine.

**11.** Procédé de fabrication d'un article, qui comporte le fait de former un substrat contenant du silicium, et le fait d'y appliquer un revêtement de mullite modifiée, comportant de la mullite et un composant modificateur qui réduit les fissures dans le revêtement de mullite modifiée, lequel composant modificateur comprend un alumino-silicate de métal alcalino-terreux, une phase cristalline de celsian monoclinique, un modificateur NZP (de type $NaZr_2P_3O_{12}$), un aluminate de calcium ou un titanate d'aluminium.

**12.** Procédé conforme à la revendication 11, qui comporte en outre le fait de faire recuire ledit revêtement de mullite modifiée, afin de convertir une phase vitreuse dudit composant modificateur en une phase compatible avec ladite mullite.

**13.** Procédé conforme à la revendication 11, qui comporte en outre le fait d'appliquer, par-dessus ledit revêtement de mullite modifiée, un revêtement formant barrière thermique et/ou barrière vis-à-vis du milieu extérieur.

**14.** Procédé conforme à la revendication 11, qui comporte le fait d'appliquer ledit revêtement de mullite modifiée par projection thermique, projection au plasma à l'air, projection au plasma sous vide, projection au plasma sous basse pression, projection de carburant/oxygène à haute vitesse (projection HVOF), dépôt à partir de vapeur, dépôt physique à partir de vapeur (PVD), ou une technique où l'on se sert d'une solution.

**15.** Procédé conforme à la revendication 11, qui comporte le fait d'appliquer ledit revêtement de mullite modifiée par dépôt chimique à partir de vapeur, par un procédé sol-gel, par enduction avec une suspension épaisse ou par enduction avec une suspension colloïdale.

**16.** Procédé conforme à la revendication 11, qui comporte le fait de former le revêtement de mullite modifiée en formant d'abord, par pulvérisation dans un broyeur à billes, une poudre de départ du composant de base du revêtement et du composant modificateur.

**17.** Procédé conforme à la revendication 11, qui comporte le fait de former le revêtement de mullite modifiée par un procédé sol-gel ou par un procédé colloïde.

**18.** Procédé de fabrication d'un article revêtu, qui comporte le fait de former un composite de silicium/carbure de silicium doté de fibres contenant du carbure de silicium, et le fait d'y appliquer un revêtement de mullite modifiée, comprenant de la mullite et un alumine-silicate de baryum et strontium (BSAS) qui réduit les fissures dans le revêtement de mullite modifiée, et en option, le fait d'appliquer, par-dessus ce revêtement de mullite modifiée, un revêtement de zircone stabilisée à l'oxyde d'yttrium.

**19.** Article revêtu, qui comporte un composite de silicium/carbure de silicium doté de fibres contenant du carbure de silicium, un revêtement de mullite modifiée, comprenant de la mullite et un alumino-silicate de baryum et strontium (BSAS) qui réduit les fissures dans le revêtement de mullite modifiée, et en option, par-dessus ce revêtement de mullite modifiée, un revêtement de zircone stabilisée à l'oxyde d'yttrium.

Fig.1.

FIG. 2

YSZ

SiC/SiC

100 μm

FIG. 3

**FIG. 4**

FIG. 5